# EUROPEAN PATENT APPLICATION

(11) **EP 2 455 611 A2**
(43) Date of publication of application: **23.05.2012**
(21) Application number: 11189387.1
(22) Date of filing: 16.11.2011
(51) Int. Cl.: F03D 7/02

(54) **Pitch system balancing for a wind turbine**

(30) Priority: 18.11.2010 DK 201070494
(71) Applicant: Envision Energy (Denmark) ApS, 8600 Silkeborg (DK)
(72) Inventor: Grabau, Peter, 6000 Kolding (DK); Friedrich, Michael, 8600 Silkeborg (DK); Sørensen, Carsten Bendix, 8270 Højbjerg (DK)
(74) Representative: Gregersen, Niels Henrik

(57) **Abstract**

A balancing method and system for a partial pitch rotor blade for a wind turbine is described. Balancing elements are mounted to the pitch system of the rotor blade, which remove the need for complicated balancing operations to be performed which may affect the structural stability of the rotor blade body. A method is described wherein a suitable compensating balancing weight for mounting to the pitch system may be used, the weight chosen based on the known tip and root weights of standard blade extender and rotor blade parts used.

## Description

### Field of the Invention

The present invention relates to a system and method for balancing a wind turbine blade, in particular a partial pitch wind turbine blade.

### Background of the Invention

In wind turbine construction, a two or a three bladed rotor must be accurately balanced. Otherwise the turbine may have problems during start-up and operation. Usually, some balance weights are placed close to root of the blade and close to tip also. Recently, the preferred method is to add weight to the tip only, in order to achieve the same self weight moment for all blades.

An example of a known balancing system is seen in Danish Patent DK 176901 B1. This involves the formation of holes in the body of the blade for the addition of balancing weights along the blade. In practice, it is relatively difficult to close a hole in a very flexible glass fibre blade shell. Also, a special chamber is required for the balancing weight, which results in additional costs for manufacture. Furthermore, there are potential risks that balancing weights may fall off and destroy the internal blade, or in worst case be thrown several hundred meters away from the turbine.

US 2008/124216 A1 discloses a wind turbine comprising three blades, where said blades are partial pitch blades each comprising an inner blade portion and an outer blade portion. The pitch system is operable to pitch the outer blade portion relative to the inner blade portion, but the document does not disclose details about balancing the blades in any manner.

It is an object of the invention to provide an alternative balancing system for modem wind turbine blades.

### Description of the Invention

Accordingly, there is provided a partial pitch rotor blade for a wind turbine, said rotor blade having a length of at least 35 metres, the blade comprising:
an inner blade portion;
an outer blade portion;
a pitch system provided between said inner blade portion and said outer blade portion, said pitch system comprising at least a first flange in connection with a first part of a bearing and at least a second flange in connection with a second part of said bearing and further comprising a pitch mechanism, said pitch mechanism being operable to pitch said outer blade portion relative to said inner blade portion, wherein said pitch system comprises at least one balancing element coupled to said pitch system to balance said partial pitch blade.

As the pitch system can be used to hold the balancing weights necessary to balance the rotor blade, this allows for ease of interchange of balancing weights (i.e. weights can be relatively easily added or removed to the pitch system), improved structural stability of the rotor blade (no fundamental alterations need to be made to the blade body or profile to accommodate the weights), and improved safety (as balancing weights are no longer provided in the blade tip, there is reduced chance that the balancing weights may be thrown free of the blade, e.g. during hazardous weather conditions).

Preferably, said pitch system comprises at least one bracket to receive one or more balancing elements. The balancing elements can be made from steel, lead or other suitable material that can be arranged on said bracket or brackets. The term bracket is to be understood as a broad term, as a bracket in its simplest form can be a part of the overall construction onto which a balancing element can be installed. A bracket can however also be made with a specific shape and appearance adapted for receiving one or more balancing elements with a specific design. In a preferred embodiment of the invention one or more brackets are arranged in rigid connection with the above mentioned first and second flanges at the pitch system. The brackets have a structural purpose at the pitch system as well as the purpose of holding one or more balancing elements.

Preferably, said at least one balancing element coupled to said pitch system on said partial pitch rotor blade is a multi position able balancing element. With a multi position able balancing element it is possible to position the same balancing element in different ferent positions on the pitch system. This allows for not only balancing the blade with respect to e.g. the weight in the tip end and at the pitch system, it also allows for balancing the rotor blade in a plane orthogonal to the length of the blade.

Preferably, said at least one balancing element is at least partly constituted by a pitch mechanism. Simply by moving the pitch mechanism to a different position on the pitch system, the balance of the blade can be changed or corrected.

Preferably, said inner blade portion is a blade extender (also called a hub extender). The inner blade portion can comprise brackets and balancing elements at the root end, where it typically will be installed to a hub. A partial pitch blade can according to the invention be balanced at the root end, at the pitch system and at the tip end of the blade. Preferably it will only be balanced at the pitch system.

There is also provided a wind turbine comprising a wind turbine tower and a wind turbine nacelle provided at an upper end of said tower having a hub and a plurality of rotor blades, said rotor blades having a length of at least 35 metres, wherein said plurality of rotor blades comprises at least one partial pitch rotor blade as described above.

There is further provided a partial pitch system for a wind turbine blade, wherein the pitch system comprises at least one bracket, said bracket being arranged to receive a balancing element to balance said partial pitch blade. Preferably, said pitch system further comprises at least one balancing element.

There is also provided a method for balancing a partial pitch rotor blade for a wind turbine, the method comprising the steps of:
providing a partial pitch rotor blade comprising an inner blade portion, an outer blade portion, and a pitch system comprising at least a first flange in connection with a first part of a bearing and at least a second flange in connection with a second part of said bearing and further comprising a pitch mechanism, said pitch mechanism being operable to pitch said outer blade portion relative to said inner blade portion, and
mounting at least one balancing element to a bracket on said pitch system to balance said rotor blade.

Preferably, said balancing element is selected based on the characteristics of said rotor blade. By characteristics it is meant that the dimensional aspects of the rotor blade components, e.g. the balancing moments of an assembled rotor blade, without any balancing elements attached to it.

Preferably, said inner blade portion comprises a substantially hollow blade extender portion, and wherein said step of mounting comprises mounting said balancing elements to said pitch system through the interior of said blade extender portion.

As the blade extender is hollow, and as the balancing elements can be mounted to the pitch system (which is exposed to the interior of the assembled blade), this means that a worker may easily enter the interior of the assembled blade to add or remove balancing weights to the pitch system as needed. This removes any complicated drilling of holes etc. in the body of the blade to add balancing weights, and accordingly allows for improved structural stability of the blade construction. Accordingly, said step of providing a method for balancing a partial pitch rotor blade may comprise assembling said partial pitch rotor blade, or providing an assembled rotor blade.

Preferably, the method further comprises the step of measuring the balancing moments of said rotor blade in a balancing apparatus, wherein said balancing elements are selected based on said measured balancing moments of said rotor blade.

In general, blade manufacturers provide details regarding the required root and tip weight of both blade extenders and rotor blades. From such details, it is possible to calculate the required balancing weight which would be needed at the pitch system to achieve the same weight moment for the entire assembled blade (i.e. blade extender + pitch system + rotor blade).

Furthermore, in the case of damaged or wrongly balanced rotor blades, the system provides for a relatively easy method for removing balancing weight as required.

### Description of the Drawing

An embodiment of the invention will now be described, by way of example only, with reference to the accompanying drawings, in which:
Fig. 1 is a perspective view of a partial pitch wind turbine according to the invention; and
Fig. 2 is a perspective view of a partial pitch system according to the invention.
Fig. 3 is a perspective view of a partial pitch system according to the invention, with four brackets for positioning a pitch mechanism.

### Detailed Description of the Invention

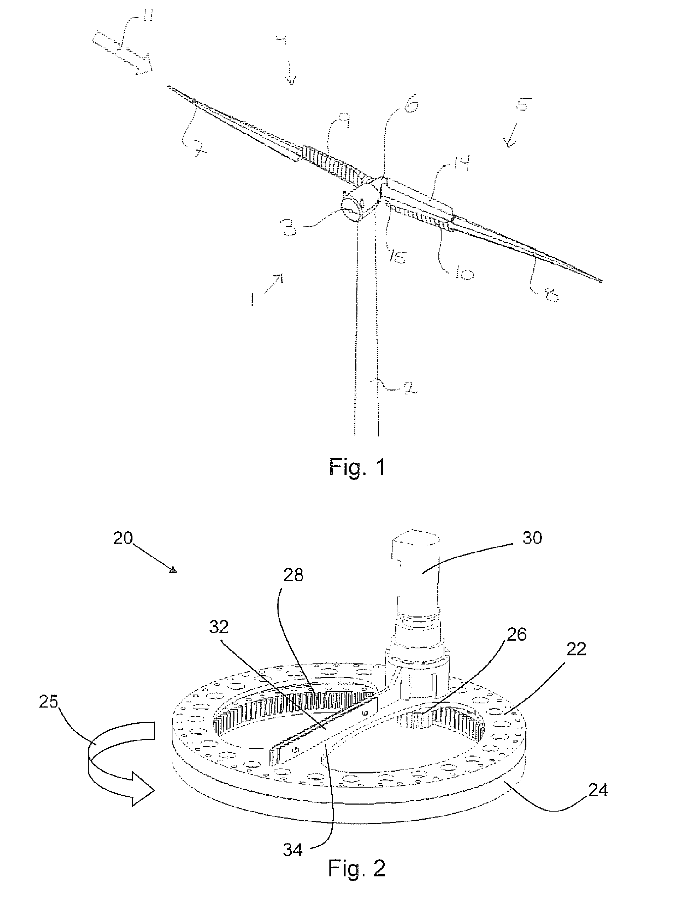

In Fig. 1 a wind turbine according to the invention is indicated generally at 1, comprising a tower 2, a nacelle 3 and a two bladed rotor with a first rotor blade 4 and a second rotor blade 5. Each of the rotor blades 4, 5 is fitted to the hub 6 on the nacelle 3. The rotor blades 4, 5 are of the partial pitch type, meaning that only the outer most blade parts 7, 8 will pitch and the inner most blade parts 9, 10 of the rotor blades 4, 5 will be in a more stationary position relative to the hub 6.

In general, the inner most blade parts 9, 10 are formed from relatively rigid blade extenders (also known as hub extenders).

As it can be seen from Fig. 1 the outer most blade parts 7, 8 are in a pitch position, where a plane described by the leading and trailing edge is mainly perpendicular to the rotor plane. Further the rotor blade 4 is pointed towards the wind direction 11.

In Fig. 1 it can also be seen that the leading edge and the trailing edge on the inner most blade parts 9, 10 are pointed mainly in the same plane as the rotor plane. On the inner most part 10 of the rotor blade 5 a fin 14 is seen on the leading edge. The inner most blade part 10 on the second rotor blade 5 is fitted with a second fin 15, whereby the stability of the complete system, during stand still e.g. at high wind speed, is increased. It will be understood that the system of the invention may be applied to any partial pitch system, with or without such fins 14, 15.

With reference to Fig 2, a pitch system for pitching the blades of a partial pitch wind turbine is indicated generally at 20. The pitch system 20 comprises a blade extender circular flange 22 coupled to an outer blade circular flange 24. The two flanges 22, 24 are provided in register with one another, and said outer blade circular flange 24 is operable to angularly rotate relative to said blade extender circular flange 22, e.g. in the direction indicated by arrow 25.

A toothed cog wheel 26 is provided coupled to said blade extender circular flange 22. The interior surface of said outer blade circular flange 24 comprises a toothed track 28, wherein said toothed cog wheel 26 is arranged to run on said track.

A control connection 30 is provided on said blade extender circular flange 22, said control connector arranged to drive said toothed cog wheel 26, so that said outer blade circular flange 24 may be controllable rotated relative to said blade extender circular flange 22.

In use, said blade extender circular flange 22 is bolted to said inner most blade parts 9, 10 of the wind turbine 1 (e.g. via bolt holts seen in Fig. 2), and said outer blade circular flange 24 is bolted to said outer most blade parts 7, 8 of the wind turbine 1, so that the outer most blade parts 7, 8 may be pitched relative to the inner most blade parts 9, 10 through relative rotation of the flanges 22, 24.

Control signals/power is provided to the pitch system 20 via the control connection 30. The control connection 30 is coupled to the cog wheel 26 via a pitch gear 31. The pitch gear 31 is installed to a bracket 34 on the pitch system 20. It is to be understood that fig. 2 shows a pitch gear 31, but other solutions with no gear can also be used and can be connected between the flanges 22 and 24.

In order to appropriately balance the blades 4, 5 of the wind turbine 1, the pitch system 20 further comprises at least one balancing element or balancing weight 32 mounted on a span member or bracket 34 provided on said blade extender circular flange 22. The balancing elements 32 are chosen so as to add compensation weights to the blades 4,5 to ensure that the wind turbine 1 is in balance.

Knowing the weight of the inner and outer most blade parts 7, 8, 9, 10, as well as the weight of the pitch system 20 itself, an appropriate weight of balancing element 32 can be chosen for the wind turbine blade 4, 5 in question.

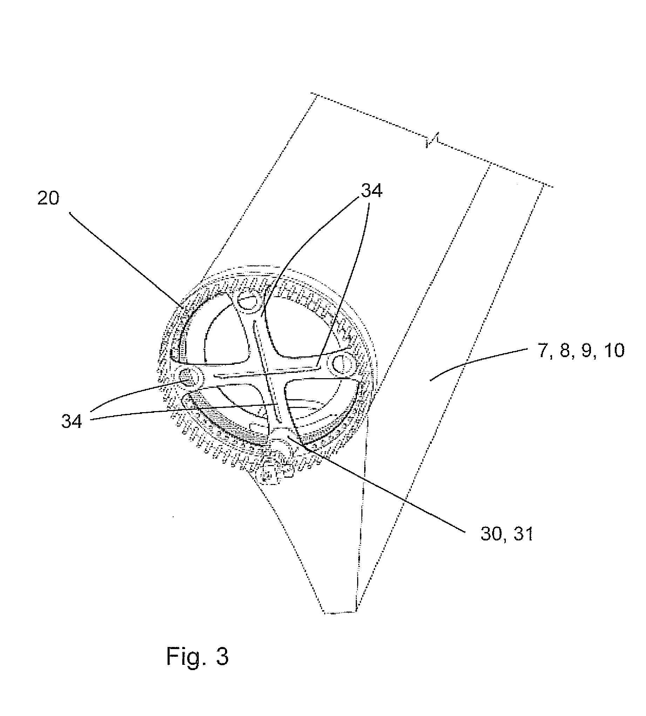

With reference to Fig 3, a pitch system for pitching the blades of a partial pitch wind turbine is indicated generally at 20. The pitch system 20 is installed on a blade part 7, 8, 9, 10 and is designed with four brackets 34 for a pitch gear mechanism 31. By changing the position of the pitch gear mechanism 31 from one bracket 34 to another bracket 34 the distribution of the weight of said pitch gear mechanism 31 is changed. This is another way of balancing a wind turbine blade 4, 5, that allows for a very precise and accurate fine tuning of the balance.

In cases where a blade extender and outer blade are manufactured in the same factory and balanced accordingly, they may have same weight at the root end and same weight at the tip end. This results in same self weight moment when the blades are put together, so further balancing needs to be performed when such elements are combined with a partial pitch system. This may be done by adding compensation weight to one (or two) of the pitch systems only.

In some cases, the root and tip weight of both blade extender and blade is known in advance. By performing calculations it is possible to work out how much weight is needed at the pitch system to achieve same self weight moment for all blades. This method does not require any compensation weights to be added to the blades or the blade extenders. This is the preferred method, since it is much easier to add weight to a steel pitch system than to a glass fibre blade or extender. Also, in case of a wrongly balanced rotor it is easy to add or take away more compensation weight. This is an advantage in the case of replacement of a lightning damaged blade.

In other cases, a rotor may be assembled together, comprising an outer blade, a pitch system, and a blade extender. The assembled blade can then be lifted onto a balancing apparatus, and the extra weight needed to be added to the blade can be measured by mounting a measuring scale at the pitch area of the blade. Accordingly, a worker can then crawl into the blade extender section and add the compensation weight to the pitch system. Such a method allows for the ease of balancing of blades after the blade has been assembled.

While the balancing elements 32 are provided as bars of for example lead, it will be understood that the balancing element may have any suitable construction, and may be coupled to any suitable portion of the pitch system 20.

It will be understood that while a two-bladed wind turbine is shown in the embodiment, the invention may be easily applied to any wind turbine design utilising a partial pitch blade.

The above system provides the advantage of an accurate balancing system which does not require any openings to be formed in the blade for the addition of compensating weights, which may affect the integrity of the blade. Also there is reduced risk in loose weights being thrown from the blade during operation.

The invention is not limited to the embodiments described herein, and may be modified or adapted without departing from the scope of the present invention.

## Claims

1. A partial pitch rotor blade (4, 5) for a wind turbine (1), said rotor blade (4, 5) having a length of at least 35 metres, the blade (4, 5) comprising:
an inner blade portion (9, 10);
an outer blade portion (7, 8);
a pitch system (20) provided between said inner blade portion (9, 10) and said outer blade portion (7, 8), said pitch system (20) comprising at least a first flange (22) in connection with a first part of a bearing and at least a second flange (24) in connection with a second part of said bearing and further comprising a pitch mechanism (30, 31), said pitch mechanism (30, 31) being operable to pitch said outer blade portion (7, 8) relative to said inner blade portion (9, 10), wherein said pitch system (20) comprises at least one balancing element (30, 31, 32) coupled to said pitch system (20) to balance said partial pitch blade (4, 5).

2. The rotor blade of claim 1, wherein said pitch system (20) comprises at least one bracket (34) to receive one or more balancing elements (30, 31, 32).

3. The rotor blade of claim 1 or claim 2, wherein said at least one balancing element (30, 31, 32) coupled to said pitch system (20) on said partial pitch rotor blade (4, 5) is a multi position able balancing element (30, 31, 32).

4. The rotor blade of any one of claims 1 to 3, wherein at least one balancing element (30, 31, 32) is constituted by a pitch mechanism (30, 31).

5. The rotor blade of any one of claims 1 to 4, wherein said inner blade portion (9, 10) is a blade extender.

6. A wind turbine (1) comprising a wind turbine tower (2) and a wind turbine nacelle (3) provided at an upper end of said tower (2) having a hub (6) and a plurality of rotor blades (4, 5), said rotor blades (4, 5) having a length of at least 35 metres, wherein said plurality of rotor blades (4, 5) comprises at least one partial pitch rotor blade (4, 5) as claimed in any one of claims 1 to 5.

7. A partial pitch system (20) for a wind turbine blade (4, 5), wherein the pitch system (20) comprises at least one bracket (34), said bracket (34) being arranged to receive a balancing element (30, 31, 32) to balance said partial pitch blade (4, 5).

8. A method for balancing a partial pitch rotor blade (4, 5) for a wind turbine (1), the method comprising the steps of:
providing a partial pitch rotor blade (4, 5) comprising an inner blade portion (9, 10), an outer blade portion (7, 8), and a pitch system (20) comprising at least a first flange (22) in connection with a first part of a bearing and at least a second flange (24) in connection with a second part of said bearing and further comprising a pitch mechanism (30, 31), said pitch mechanism (30, 31) being operable to pitch said outer blade portion (7, 8) relative to said inner blade portion (9, 10), and
mounting at least one balancing element (30, 31, 32) to a bracket (34) on said pitch system (20) to balance said rotor blade (4, 5).

9. The method of claim 8, wherein said balancing element (30, 31, 32) is selected based on the characteristics of said rotor blade (4, 5).

10. The method of claim 8 or claim 9, wherein said inner blade portion (9, 10) comprises a substantially hollow blade extender portion (9, 10), and wherein said step of mounting comprises mounting said balancing element (30, 31, 32) to said pitch system (20) through the interior of said blade extender portion (9, 10).

11. The method of any one of claims 8 to 10, wherein the method further comprises the step of measuring the balancing moments of said rotor blade (4, 5) in a balancing apparatus, wherein said balancing element (30, 31, 32) is selected based on said measured balancing moments of said rotor blade (4, 5).
